(19) Europäisches Patentamt
European Patent Office
Office européen des brevets

(11) **EP 1 452 247 B1**

(12) **EUROPEAN PATENT SPECIFICATION**

(45) Date of publication and mention
of the grant of the patent:
**26.01.2011 Bulletin 2011/04**

(21) Application number: **02801501.4**

(22) Date of filing: **08.10.2002**

(51) Int Cl.:
*B21D 1/02* (2006.01)    *B21B 1/38* (2006.01)
*B21B 45/00* (2006.01)    *B21B 45/02* (2006.01)
*C21D 1/42* (2006.01)

(86) International application number:
**PCT/JP2002/010435**

(87) International publication number:
**WO 2003/033185 (24.04.2003 Gazette 2003/17)**

(54) **METHOD OF MANUFACTURING STEEL PLATE**

VERFAHREN ZUR HERSTELLUNG EINER STAHLPLATTE

PROCEDE DE FABRICATION D'UNE TOLE D'ACIER

(84) Designated Contracting States:
**DE FR GB**

(30) Priority: **10.10.2001 JP 2001312418**

(43) Date of publication of application:
**01.09.2004 Bulletin 2004/36**

(73) Proprietor: **JFE Steel Corporation
Tokyo, 100-0011 (JP)**

(72) Inventors:
• **SEKINE, Hiroshi,
c/o JFE Steel Corporation
Tokyo 100-0011 (JP)**
• **Fujibayashi, Akio,
c/o JFE Steel Corporation
Tokyo 100-0011 (JP)**
• **Hino, Yoshimichi,
c/o JFE Steel Corporation
Tokyo 100-0011 (JP)**

• **Tagane, Akira,
c/o JFE Steel Corporation
Tokyo 100-0011 (JP)**
• **Sugioka, Masatoshi
c/o JFE Steel Corporation
Tokyo 100-0011 (JP)**

(74) Representative: **HOFFMANN EITLE
Patent- und Rechtsanwälte
Arabellastraße 4
81925 München (DE)**

(56) References cited:
**EP-A1- 1 359 230    EP-A2- 1 179 375
JP-A- 3 128 122    JP-A- 6 254 615
JP-A- 6 254 615    JP-A- 11 019 724
JP-A- 11 019 724    JP-A- 2000 042 631
JP-A- 2000 042 631**

**Description**

**TECHNICAL FIELD**

The present invention relates to a method for manufacturing a steel plate, in particular, a method for manufacturing on-line a steel plate having excellent flatness and desired properties without reduction in productivity.

**BACKGROUND ART**

Japanese Unexamined Patent Application Publication No. 61-262428, Japanese Unexamined Patent Application Publication No. 3-128122, and the like disclose on-line cooling technologies in which a cooling device is disposed connecting directly to a rolling mill, and a rolled steel plate is subjected to accelerated cooling in order to have desired properties. However, deformation such as camber generates due to rolling strain and cooling strain remaining in the steel plate subjected to accelerated cooling and, thereby, the flatness of the steel plate is deteriorated significantly. Therefore, the steel plate is obliged to receive on-line rectification. However, since the temperature of the steel plate decreases, adequate rectification is not readily performed. Even if the rectification could be completed, deformation tends to generate again due to stress relief when the steel plate is sheared afterward. Consequently, the steel plate must be rectified again off-line or be subjected to stress relief annealing after cooling, which reduces the productivity significantly.

A steel plate, such as a high strength steel plate for line pipe, required to have high strength and high toughness must be subjected to off-line tempering treatment after hot rolling and subsequent quenching or accelerated cooling in an accelerated cooling device, reducing the productivity significantly as well.

In order to improve the productivity, Japanese Patent No. 3015923 proposes a method for tempering a steel plate after quenching or accelerated cooling using a heating device disposed on-line.

However, no conditions are described for uniformly heating on-line a steel plate with high productivity nor for attaining excellent flatness of the steel plate.

**DISCLOSURE OF THE INVENTION**

It is an object of the present invention to provide a method for manufacturing on-line a steel plate having excellent flatness and desired properties without reduction in productivity.

This object can be achieved by a method for manufacturing a steel plate by the use of a steel plate manufacturing facility provided with at least one cooling device, at least one rectifying device, and at least one induction heating device, which are disposed in that order downstream from at least one hot rolling mill. The method comprises the steps of: accelerated cooling a steel plate rolled by the hot rolling mill with the cooling device; rectifying the accelerated cooled steel plate with the rectifying device; and sequentially heating the rectified portions of the steel plate with the induction heating device during the rectification of the steel plate.

**BRIEF DESCRIPTION OF THE DRAWINGS**

Fig. 1 is a diagram showing an example of manufacturing facilities for carrying out the method for manufacturing a steel plate according to the present invention.
Fig. 2 is a diagram showing another example of manufacturing facilities for carrying out the method for manufacturing a steel plate according to the present invention.
Fig. 3 is a diagram showing further another example of manufacturing facilities for carrying out the method for manufacturing a steel plate according to the present invention.
Figs. 4A to 4C are diagrams showing the temperature rising behavior of steel plate at respective passes.
Figs. 5A to 5C are diagrams showing the electric power input of inductors corresponding respectively to the passes shown in Figs. 4A to 4C.

**EMBODIMENTS OF THE INVENTION**

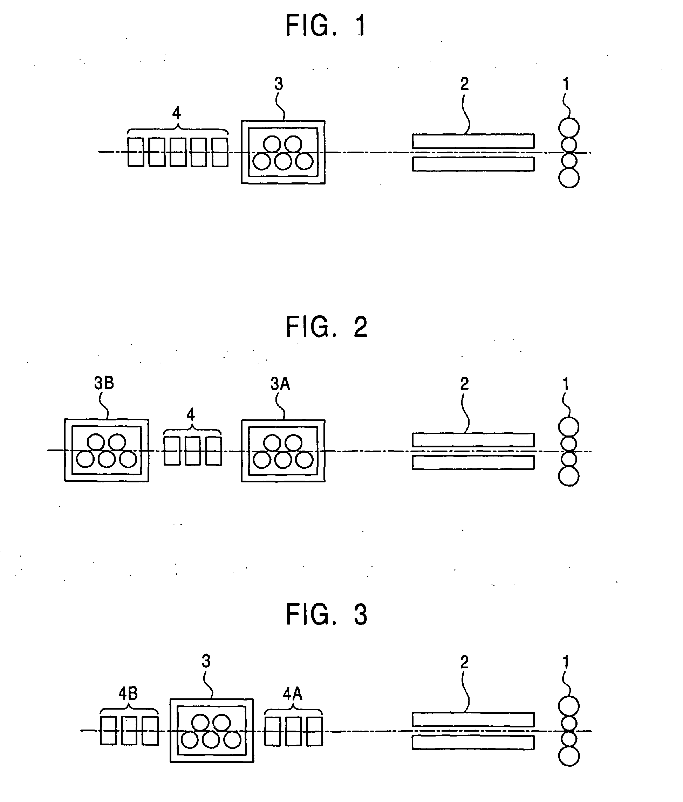

Fig. 1 is a diagram showing an example of manufacturing facilities for carrying out the method for manufacturing a steel plate according to the present invention.

In this manufacturing facility, one cooling device 2, one hot leveler 3 serving as a rectifying device, and a plurality of solenoid type induction heating devices 4 (hereafter simply referred to as inductors) are disposed in that order downstream from one finishing rolling mill 1 and, thereby, rectification and heating can be performed on-line. The hot leveler 3 and the inductors 4 are disposed close to each other.

In order to make fine crystal grains and to control transformation microstructure, the steel plate rolled by the finishing rolling mill 1 to have a predetermined thickness is subjected to accelerated cooling with the cooling device 2 immediately after hot rolling.

Deformation such as camber generates due to rolling strain and cooling strain remaining in the accelerated cooled steel plate. However, the hot leveler 3 allows to eliminate these strains and rectify the steel plate.

The rectified portions are heated sequentially with the inductors 4 disposed on the outlet side of the hot leveler 3 during the rectification of the steel plate, so that both tempering and residual stress relief can be conducted on the steel plate.

In general, when a steel plate is heated with inductors and at the same time transferred at a non-constant speed, non-uniform heating occurs in the longitudinal direction of the steel plate. And the surface of the steel plate is superheated with inductors. The transferring speed must be, therefore, strictly controlled in order to keep the surface temperature at a predetermined temperature or lower. In the present invention, the rectified portions are heated sequentially with the inductors 4 during the rectification of the steel plate and, thereby, the transferring speed of the steel plate during the heating can be controlled at the point of the hot leveler 3. Therefore, more accurate speed control is possible as compared with the case where the transferring speed is controlled by the rotating speed of transferring rolls. Consequently, uniform and accurate heating can be realized with the inductors 4. In addition, rectification and heating can be performed almost simultaneously at a relatively large transferring speed and, thereby, high productivity can be achieved. A plurality of inductors 4 make it possible to perform uniform heating in a shorter time, which is advantageous for on-line heat treatment.

For on-line tempering treatment, the heating with the inductors 4 should be performed so that the central portion in the plate thickness direction is heated at a predetermined temperature (for example, 650°C). On the other hand, for residual stress relief treatment, the heating with the inductors 4 should be performed so that the temperature should be controlled not to have any influence on the properties of the steel plate (for example, less than or equal to the Acl transformation point).

If the steel plate is transferred reversibly, and rectification and heat treatment are repeated, then the number of inductors 4 can be decreased to simplify the facility. Since the heated steel plate can be rectified again with the hot leveler 3, the flatness of the steel plate can be further improved. Furthermore, there are merits in that, for example, since the steel plate can be rectified at a high temperature, accumulation of the residual stress is small and deformation due to shear can be thereby prevented. In addition, high speed rectification is also possible to improve the productivity.

An example of pass schedules of the method according to the present invention, in which the manufacturing facility shown in Fig. 1 is used, will be described below.

First pass: A steel plate subjected to accelerated cooling is heated with the inductors 4 while being rectified with the hot leveler 3. Since the steel plate having excellent flatness can be fed to the inductors 4 at a constant transferring speed, troubles related to heat treatment are reduced, so that uniform and rapid heating can be performed. Second pass: The steel plate is transferred reversibly, and rectified again with the hot leveler 3. Since the steel plate is heated to a high temperature at the first pass, excellent flatness can be achieved through high speed rectification. Furthermore, the heating strain generated through rapid heating at the first pass can be relieved. At this second pass as well, heating can be performed with the inductors 4.

Third pass: The steel plate is rectified again with the hot leveler 3, and simultaneously heated with the inductors 4. The temperature is finally controlled at this pass, and uniform heating is performed while the steel plate is transferred at a constant speed. The rectification at the second pass may be omitted.

In this case, when heating is performed with the inductors 4, the surface of the steel plate tends to be superheated as compared with the central portion in the plate thickness direction and, therefore, desirably the surface of the steel plate should be cooled after heating. In the present pass schedule, since rectification can be performed with the hot leveler 3 after heating, the surface of the steel plate can be cooled by heat transfer to the leveler rollers, so that the deterioration of the properties of the steel plate due to superheat can be prevented. Furthermore, the cooling of the surface of the steel plate also makes it easy to perform rapid heating when the steel plate is heated again with the inductors 4.

Fig. 2 shows another example of manufacturing facilities for carrying out the method for manufacturing a steel plate according to the present invention.

In this manufacturing facility, a cooling device 2, a first hot leveler 3A, a plurality of inductors 4, and a second hot leveler 3B are disposed in that order downstream from a finishing rolling mill 1.

An example of pass schedules of the method according to the present invention, in which the manufacturing facility shown in Fig. 2 is used, will be described below.

First pass: A steel plate subjected to accelerated cooling is heated with the inductors 4 while being rectified with the hot leveler 3A.

Second pass: The steel plate is transferred reversibly, and heated with the inductors 4 while being rectified with the hot leveler 3B.

Third pass: The steel plate is rectified again with the hot leveler 3A, simultaneously heated with the inductors 4, and rectified with the hot leveler 3B.

In this case, since the second hot leveler 3B is disposed on the outlet side of the inductors 4, even at the second pass, uniform heating can be performed with the inductors 4 while being rectified with the hot leveler 3B at the same transferring speed. To relieve heating strain, the rectification may be performed with the hot leveler 3A after heating with the inductors 4. In particular, when the rectification is performed with the second hot leveler 3B after heating at the third pass, the steel plate having more excellent flatness can be manufactured.

The present pass schedule is not limited to that in the above description. For example, rectification and heating at the second pass may be omitted so as to increase the transferring speed, thereby improving the productivity.

Fig. 3 shows further another example of manufacturing facilities for carrying out the method for manufacturing a steel plate according to the present invention.

In this manufacturing facility, a cooling device 2, a plurality of inductors 4A, a hot leveler 3, and a plurality of inductors 4B are disposed in that order downstream from a finishing rolling mill 1. The arrangement of the inductors 4A and 4B disposed respectively before and after the hot leveler 3 is different from those shown in Fig. 1 and Fig. 2.

An example of pass schedules of the method according to the present invention, in which the manufacturing facility shown in Fig. 3 is used, will be described below.

First pass: A steel plate subjected to accelerated cooling is heated with the inductors 4A. At this time, since rolling strain and cooling strain remain in the steel plate, uniform heating cannot be performed. Therefore, small electric input power is given for preheating. The preheated steel plate is then heated with the inductors 4B while being rectified with the hot leveler 3. Since the steel plate is preheated, the flatter steel plate can be fed into the inductors 4B.

Second pass: The steel plate is transferred reversibly, and heated with the inductors 4A while being rectified with the hot leveler 3. At this time, the steel plate can also be heated with the inductors 4B.

Third pass: The steel plate is rectified again with the hot leveler 3, and simultaneously heated with the inductors 4B.

At this time, the steel plate can also be heated with the inductors 4A.

In this case, since the inductors 4A and 4B are arranged before and after the hot leveler 3, the heating capability is so high that it is effective for high heating temperature or for large thickness of the steel plate.

The present pass schedule is not limited to that in the above description. For example, at the second pass, only the rectification with the hot leveler 3 may be performed, or neither the rectification nor the heating may not be performed. It is preferable that the number of the inductors 4A before the hot leveler 3 is the same as that of the inductors 4B after the hot leveler 3.

In any one of the above-described methods, if the rectification is performed with the hot leveler under the condition in which the surface temperature of the steel plate is higher than the average temperature of the steel plate after heating with the inductors, the rectification capability is improved to manufacture a flatter steel plate. For this purpose, the transferring speed of the steel plate between the inductors and the hot leveler should be controlled as described below.

The surface temperature of the steel plate after heating with the inductors decreases almost exponentially with time. Consequently, the surface temperature T(t) after a laps of t second from the end of heating can be approximated by the following formula (1).

$$\mathtt{T(t) \ = \ Tao \ + \ (Tso \ - \ Tao) \, exp \, (-t/\tau)} \qquad \mathtt{(1)}$$

where $\tau$ represents a time constant of thermal diffusion of the steel plate (s), Tso represents a surface temperature (°C) at the end of heating, and Tao represents an average temperature (°C) in the plate thickness direction at the end of heating.

As is clear from the formula (1), the surface temperature of the steel plate is higher than the average temperature of the steel plate when the value of $t/\tau$ becomes about 2 or less. (For example, if the surface temperature immediately after heating is assumed to be about 100°C higher than the average temperature, the surface temperature is higher than the average temperature by $100 \exp(-2) = 14$°C when the value of $t/\tau$ is 2.)

The time constant $\tau$ can be determined based on the simulation of the surface temperature in accordance with the plate thickness. For example, when the plate thickness is 40 mm, $\tau = 3.7$ s, when the plate thickness is 25 mm, $\tau = 2.1$ s, and when the plate thickness is 12.5 mm, $\tau = 0.8$ s.

Consequently, when the distance between the inductors and the hot leveler is represented by L m, the steel plate can be rectified under the condition in which the surface temperature is higher than the average temperature by controlling the transferring speed of the steel plate to $[L/(2\tau)]$ m/s or more.

The above-described method for manufacturing a steel plate according to the present invention is effective particularly for manufacturing a steel plate having a thickness of 25 mm or less, which includes large rolling strain and cooling strain, or a highly accelerated cooled steel plate. These steel plates are generally hard to be rectified, and reversibly rectified by at least three passes. However, the present invention allows a steel plate having excellent flatness to be manufactured through the same number of passes. Furthermore, on-line tempering treatment can be performed with the same efficiency, so that significant reduction in delivery time and reduction in cost can be achieved.

Example

The steel plate manufacturing facility shown in Fig. 1 was used. A hot rolled steel plate having a thickness of 25 mm and a width of 3,500 mm was accelerated cooled to 230°C with the cooling device, followed by rectification with the hot leveler and heating with the inductors according to the following pass schedule. Five inductors having a coil length of 1.2 m, disposed at 1 m spacing, were used. The distance between the hot leveler and the inductors were 3 m. The aimed temperature of the center in the thickness direction was set to 650°C from the viewpoint of the tempering treatment, and the aimed surface temperature of the steel plate was set to 700°C or less from the viewpoint of the properties.

First pass: The hot leveler speed was 20 mpm (preliminary rectification: rectifying camber of front or rear end), the upper surface temperature of the steel plate was 70°C at the inlet of the inductors, the inductor heat treatment speed was 20 mpm, and the upper surface temperature of the steel plate was 545°C at the outlet of the inductors.

Second path: The hot leveler speed was 80 mpm (strain rectification pass), the inductor heat treatment speed was 80 mpm, and the upper surface temperature of the steel plate was 607°C at the outlet of the inductors.

Third pass: The hot leveler speed was 40 mpm, the inductor heat treatment speed was 40 mpm, and the upper surface temperature of the steel plate was 650°C at the outlet of the inductors.

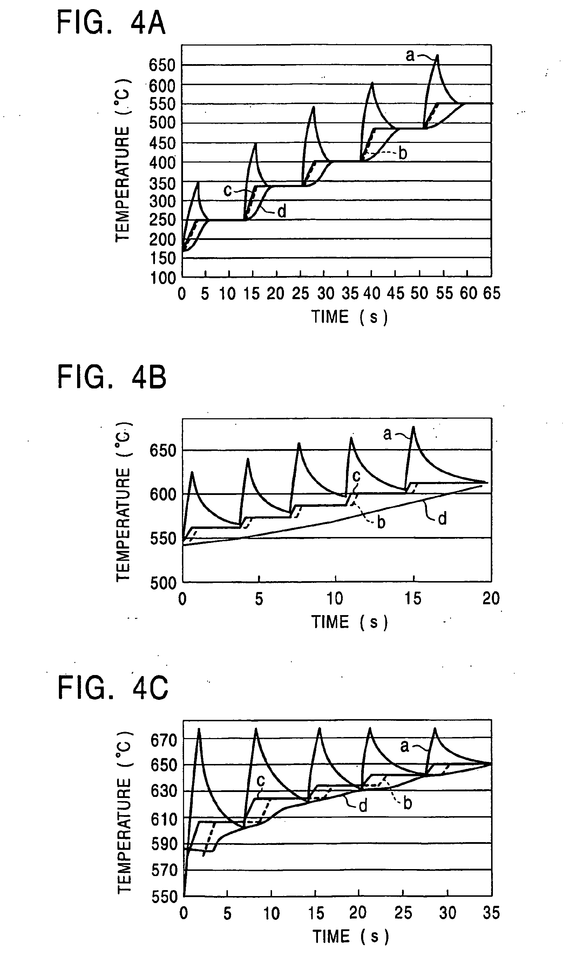

Figs. 4A to 4C show the temperature rising behavior of the steel plate at the first pass, at the second pass, and at the third pass, respectively. The horizontal axis indicates the time (s), and the vertical axis indicates the temperature (°C). Symbol a indicates the upper surface temperature of the steel plate, symbol b indicates the temperature at a location one-quarter of the plate thickness from the upper surface (1/4 upper surface temperature), and symbol c indicates the temperature of the center in the plate thickness direction, and symbol d indicates the average temperature through the plate thickness direction. Here, b to d are values determined by calculation based on the measured upper surface temperature a.

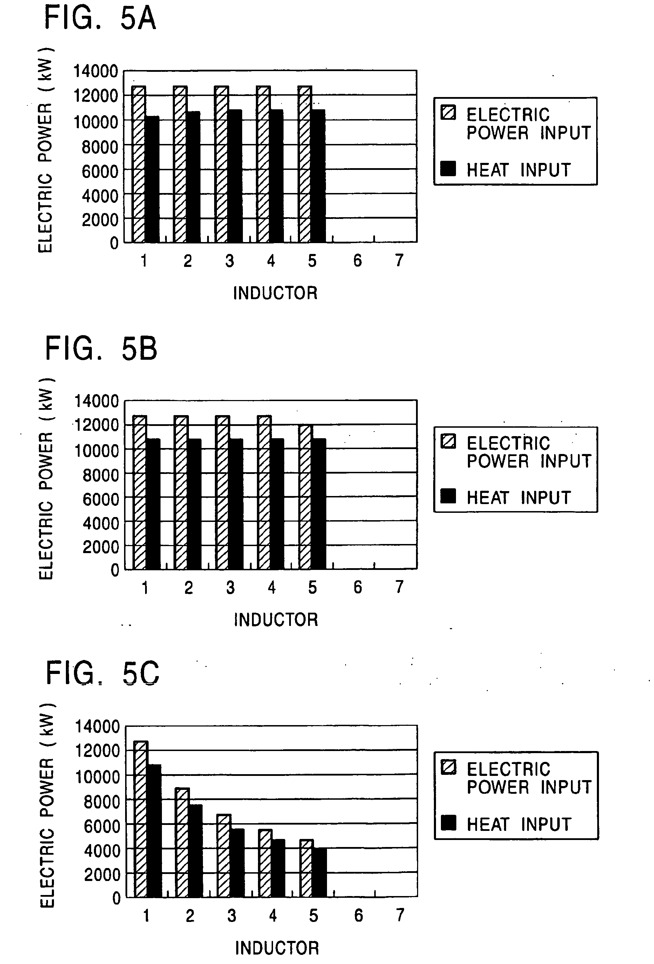

Figs. 5A to 5C show electric power inputs of the inductors required to achieve the temperature rising behavior of the steel plate at each pass shown in Figs. 4A to 4C, respectively. The horizontal axis indicates the inductor number (the number is assigned in order of decreasing proximity to the hot leveler.), the vertical axis indicates the electric power (KW), and the electric power input and the heat input calculated based on the thermal efficiency of each inductor are shown.

As is clear from the results shown in Figs. 4, the temperature of the central position in the plate thickness direction was raised to 650°C while the surface temperature of the steel plate did not exceed 700°C and, therefore, the aimed tempering treatment could be performed with high accuracy. This is not only because at the first pass in which rapid heating from 70°C to 545°C is performed, the rectified flat steel plate was fed into the inductors, and uniform heating was performed by the speed control with the hot leveler, but also because at the third pass in which the upper surface temperature of the steel plate becomes highest and the final temperature is determined, uniform heating was performed by the speed control with the hot leveler.

Furthermore, the rectification was performed at a high temperature in the neighborhood of 600°C at the second pass and the third pass and, thereby, a steel plate having excellent flatness could be manufactured. In particular, the transferring speed at the second pass was controlled to 80 mpm and, thereby, the rectification was performed under the condition in which the surface temperature was higher than the average temperature, so that the rectification capability was improved. If the time constant $\tau$ of the steel plate having a thickness of 25 mm is 2.1 s, an excellent rectification can be exerted when the transferring speed is at least 0.7 m/s (42 mpm). No deformation due to stress relief occurred even when this steel plate was cut in the following step.

In general, the rectifying speed of the steel plate subjected to accelerated cooling is 30 mpm and three passes are required. The transferring speeds are 20 mpm at the first pass (the speed is low at the first pass because the temperature must be raised), 80 mpm at the second pass (the rectifying speed is improved because of high temperature), and 40 mpm at the third pass (the speed is improved because of uniform heating) and, therefore, the rectification efficiency is improved as compared with the previous case where a steel plate subjected to accelerated cooling is rectified without being treated. That is, in the case where the steel plate subjected to accelerated cooling is heated by the method according to the present invention, on-line heat treatment can be performed with efficiency higher than or equal to the efficiency in the previous rectification.

**Claims**

1. A method for manufacturing a steel plate by the use of a steel plate manufacturing facility provided with at least one cooling device, at least one rectifying device, and at least one induction heating device, which are disposed in that order downstream from at least one hot rolling mill, the method comprising the steps of:

   accelerated cooling a steel plate rolled by the hot rolling mill with the cooling device;
   rectifying the accelerated cooled steel plate with the rectifying device; and
   sequentially heating the rectified portions of the steel plate with the induction heating device during the rectification of the steel plate.

2. The method for manufacturing a steel plate according to Claim 1, wherein rectification and heating are repeated by reversibly transferring the steel plate.

3. The method for manufacturing a steel plate according to Claims 1 or 2, wherein a solenoid type induction heating device is used as the induction heating device.

4. A method for manufacturing a steel plate according to claims 1 to 3, wherein the manufacturing facility is provided with at least one rectifying device behind the at least one induction heating device.

5. A method for manufacturing a steel plate according to claims 1 to 4, wherein at least one induction heating device is interposed between the at least one cooling device and the at least one rectifying device.

6. The method for manufacturing a steel plate according to claims 2 to 5, wherein the heated steel plate is transferred to the rectifying device at a transferring speed of at least $(L/(2\tau))$ m/s;
   where L represents the distance (m) between the induction heating device and the rectifying device, and $\tau$ represents a time constant (s) of thermal diffusion of the steel plate.

**Patentansprüche**

1. Verfahren zum Herstellen einer Stahlplatte unter Verwendung einer Stahlplattenherstellungseinrichtung, die mit zumindest einer Kühlvorrichtung, mit zumindest einer Richtvorrichtung und zumindest einer Induktionserwärmungsvorrichtung versehen ist, die in dieser Reihenfolge stromabwärts von zumindest einer Warmwalzstraße angeordnet sind, wobei das Verfahren die Schritte umfasst:

   Beschleunigtes Kühlen einer durch die Warmwalzstraße gewalzten Stahlplatte mit der Kühlvorrichtung,
   Richten der beschleunigt gekühlten Stahlplatte mit der Richtvorrichtung, und
   Nacheinander Erwärmen der gerichteten Abschnitte der Stahlplatte mit der Induktionserwärmungsvorrichtung während dem Richten der Stahlplatte.

2. Verfahren zum Herstellen einer Stahlplatte gemäß Anspruch 1, bei dem das Richten und Erwärmen durch umgekehrtes Überführen der Stahlplatte wiederholt wird.

3. Verfahren zum Herstellen einer Stahlplatte gemäß Anspruch 1 oder 2, bei dem eine Elektromagnet-Induktionserwärmungsvorrichtung als die Induktionserwärmungsvorrichtung verwendet wird.

4. Verfahren zum Herstellen einer Stahlplatte gemäß einem der Ansprüche 1 bis 3, bei dem die Herstellungseinrichtung mit zumindest einer Richtvorrichtung hinter der zumindest einen Induktionserwärmungsvorrichtung versehen ist.

5. Verfahren zum Herstellen einer Stahlplatte gemäß einem der Ansprüche 1 bis 4, bei dem zumindest eine Induktionserwärmungsvorrichtung zwischen die zumindest eine Kühlvorrichtung und die zumindest eine Richtvorrichtung eingefügt ist.

6. Verfahren zum Herstellen einer Stahlplatte gemäß einem der Ansprüche 2 bis 5, bei dem die erwärmte Stahlplatte mit einer Überführungsgeschwindigkeit von zumindest $[L/2\tau]$ m/s zur Richtvorrichtung überführt wird, wobei L den Abstand (m) zwischen der
   Induktionserwärmungsvorrichtung und der Richtvorrichtung darstellt, und $\tau$ eine Zeitkonstante (s) der thermischen Diffusion der Stahlplatte darstellt.

**Revendications**

1. Procédé destiné à fabriquer un plaque d'acier en utilisant une unité de fabrication de plaques d'acier dotée d'au moins un dispositif de refroidissement, d'au moins un dispositif de rectification, et d'au moins un dispositif de chauffage par induction, qui sont disposés dans cet ordre en aval d'au moins un laminoir à chaud, le procédé comprenant les étapes qui consistent :

   à refroidir de manière accélérée une plaque d'acier laminée par le laminoir à chaud au moyen du dispositif de refroidissement ;
   à rectifier la plaque d'acier refroidie de manière accélérée au moyen du dispositif de rectification ; et
   à chauffer de manière séquentielle les parties rectifiées de la plaque d'acier au moyen du dispositif de chauffage par induction pendant la rectification de la plaque d'acier.

2. Procédé destiné à fabriquer une plaque d'acier selon la revendication 1, dans lequel les étapes de rectification et de chauffage sont répétées en transférant la plaque de manière réversible.

3. Procédé destiné à fabriquer une plaque d'acier selon les revendications 1 ou 2, dans lequel un dispositif de chauffage par induction d'un type solénoïde est utilisé en tant que dispositif de chauffage par induction.

4. Procédé destiné à fabriquer une plaque d'acier selon les revendications 1 à 3, dans lequel l'unité de fabrication est dotée d'au moins un dispositif de rectification derrière l'au moins un dispositif de chauffage par induction.

5. Procédé destiné à fabriquer une plaque d'acier selon les revendications 1 à 4, dans lequel au moins un dispositif de chauffage par induction est interposé entre l'au moins un dispositif de refroidissement et l'au moins un dispositif de rectification.

6. Procédé destiné à fabriquer une plaque d'acier selon les revendications 2 à 5, dans lequel la plaque d'acier chauffée est transférée au dispositif de rectification à une vitesse de transfert d'au moins $[L/(2\tau)]$ m/s ;
   où L représente la distance (m) entre le dispositif de chauffage par induction et le dispositif de rectification, et $\tau$ représente une constante de temps (s) de la diffusion thermique de la plaque d'acier.

# FIG. 1

# FIG. 2

# FIG. 3

# FIG. 4A

# FIG. 4B

# FIG. 4C

## FIG. 5A

## FIG. 5B

## FIG. 5C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61262428 A
- JP 3128122 A

- JP 3015923 B